# EUROPÄISCHE PATENTSCHRIFT

(11) **EP 3 828 640 B1**
(45) Veröffentlichungstag und Bekanntmachung des Hinweises auf die Patenterteilung: **08.11.2023**
(21) Anmeldenummer: 20215578.4
(22) Anmeldetag: 25.11.2014
(51) Int. Cl.: G03H 1/00, G03H 1/02, B32B 7/06, B32B 38/18, B32B 39/00, B32B 3/08, B32B 3/16, G03H 1/30, B32B 37/22, B32B 38/00, B32B 7/12, B32B 27/08, B32B 27/30, B32B 27/36, B42D 25/328, B42D 25/455, B42D 25/46, B42D 25/475

(54) **VERFAHREN ZUR HERSTELLUNG VON SICHERHEITSDOKUMENTEN**
METHOD FOR THE PREPARATION OF SECURITY DOCUMENTS
PROCÉDÉ DE PRODUCTION DE DOCUMENTS DE SÉCURITÉ

(30) Priorität: 24.02.2014 DE 102014102354
(43) Veröffentlichungstag der Anmeldung: 02.06.2021
(62) Teilanmeldung aus: 14802661.0
(73) Patentinhaber: Bundesdruckerei GmbH, 10969 Berlin (DE)
(72) Erfinder: LEOPOLD, André, 10119 Berlin (DE); GAHLBECK, Jeffry, 12437 Berlin (DE); KULIKOVSKA, Olga, 14165 Berlin (DE); MÄRTENS, Detlef, 13599 Berlin (DE)
(74) Vertreter: Mammel und Maser Patentanwälte PartG mbB

(56) Entgegenhaltungen:
- EP-A1- 0 675 006
- DE-A1-102004 053 367

## Beschreibung

Verfahren zur Herstellung von Sicherheitsdokumenten

Die Erfindung betrifft ein Verfahren zur Herstellung von Sicherheitsdokumenten entsprechend Anspruch 1. Bevorzugte Ausführungsformen sind in den abhängigen Ansprüchen 2-12 wiedergegeben.

Aus der EP 0 466 118 A2 ist ein Hologramm bekannt, welches durch eine mechanisch stabile Schicht ausgebildet ist, die auf einer Schutzschicht als selbsttragende und dimensionsstabile Schicht aufgebracht ist. Zur Herstellung eines solchen Hologramms ist vorgesehen, dass in einem ersten Schritt auf eine Trägerfolie eine Trennschicht aufgebracht wird. In einem anschließenden Schritt wird die transparente, selbsttragende, dimensionsstabile Schutzschicht auf die Trennschicht aufgebracht. Darauf folgend wird dieses Verbundmaterial mit einer fotografischen Emulsion oder einem Fotopolymer beschichtet. Diesem Schritt schließt sich das Einbringen eines Volumenhologramms in die Emulsion des Fotopolymers durch eine Belichtung an. Anschließend wird die Emulsion oder das Polymer mit einer schwarzen Rückschicht abgedeckt, bevor eine Klebeschicht und eine ablösende Schutzschicht auf die Klebeschicht aufgebracht werden. Dieses Verfahren weist den Nachteil auf, dass durch das vollflächige Beschichten des Verbundmaterials mit einer fotografischen Emulsion oder einem Fotopolymer ein hoher Materialverbrauch gegeben ist. Darüber hinaus ist dieses Herstellungsverfahren in eine Fertigungslinie nicht integrierbar.

Aus der EP 0 466 118 A2 ist ein Hologramm bekannt, welches durch eine mechanisch stabile Schicht ausgebildet ist, die auf einer Schutzschicht als selbsttragende und dimensionsstabile Schicht aufgebracht ist. Zur Herstellung eines solchen Hologramms ist vorgesehen, dass in einem ersten Schritt auf eine Trägerfolie eine Trennschicht aufgebracht wird. In einem anschließenden Schritt wird die transparente, selbsttragende, dimensionsstabile Schutzschicht auf die Trennschicht aufgebracht. Darauf folgend wird dieses Verbundmaterial mit einer fotografischen Emulsion oder einem Fotopolymer beschichtet. Diesem Schritt schließt sich das Einbringen eines Volumenhologramms in die Emulsion des Fotopolymers durch eine Belichtung an. Anschließend wird die Emulsion oder das Polymer mit einer schwarzen Rückschicht abgedeckt, bevor eine Klebeschicht und eine ablösende Schutzschicht auf die Klebeschicht aufgebracht werden. Dieses Verfahren weist den Nachteil auf, dass durch das vollflächige Beschichten des Verbundmaterials mit einer fotografischen Emulsion oder einem Fotopolymer ein hoher Materialverbrauch gegeben ist. Darüber hinaus ist dieses Herstellungsverfahren in eine Fertigungslinie nicht integrierbar.

Aus der EP 0 675 006 A1 ist ein Schichtverbund zum Übertragen von optisch variablen Elementen auf zu sichernde Gegenstände bekannt. Auf einem Trägersubstrat werden isolierte Einzelelemente erzeugt, welche einen Schichtausbau aus einer ausgehärteten Lackschicht mit einer darauf aufgebrachten Beugungsstruktur sowie einer Metallisierungsschicht bekannt. Dieses Einzelelement wird im Transferverfahren auf das Dokument übertragen und mittels einer Klebeschicht daran befestigt und/oder in einer Klebeschicht eingebunden und auf dem Dokument befestigt.

Aus der DE 10 2008 057 485 A1 ist ein Verfahren zur Herstellung eines Mehrfarben-Volumenhologrammes mit holografischen Pixeln in einer Photopolymerschicht eines Photopolymerfilms bekannt. Um eine photochemische Wechselwirkung zwischen benachbarten Pixeln zu unterdrücken, wird vor dem Belichten der Pixel in einem Grenzbereich zwischen je zwei benachbarten Pixeln eine Querdiffusionssperre eingearbeitet. Diese Querdiffusionssperre unterdrückt eine Querdiffusion aktivierter Monomere zwischen den benachbarten Pixeln.

Aus der DE 10 2004 053 367 A1 ist ein Wertdokument bekannt, bei welchem unmittelbar auf den Träger des Wertdokuments eine Substanz aufgetragen wird, um durch eine Belichtung dieser Substanz ein Volumenhologramm einzubringen. Vor der Belichtung wird der bedruckte Bereich der Trägerschicht durch eine Prägeeinrichtung geprägt oder mittels einer Kalandriereinrichtung bearbeitet.

Aus der US 2005/213175 ist eine Vorrichtung zum Anbringen von Inseln eines Hologrammaufnahmemediums auf Papierstücken bekannt, wobei eine Trägerfolie der Hologramme auf den Papierstücken als Schutzfolie verbleibt.

Der Erfindung liegt die Aufgabe zugrunde, ein Verfahren zur Herstellung von Sicherheitsdokumenten vorzuschlagen, welches kostengünstig ist und zur Materialreduktion bei der Beschichtung mit einem holografischen Material beiträgt und in eine Fertigungslinie eingebunden ist.

Die der Erfindung zugrundeliegende Aufgabe wird durch ein Verfahren nach den Ansprüchen 1 bis 12 gelöst. Das Verfahren beinhaltet die Herstellung eines Verbundelementes, bei welchem eine Trägerschicht einem Auftragswerk zugeführt wird, in dem ein fließfähiges holografisches Material bevorratet wird, durch welches mittels einem Auftragsverfahren durch das Auftragswerk auf die Trägerschicht eine partielle Beschichtung aufgebracht wird, einen Nutzen zu bilden und in einem nachfolgenden Arbeitsschritt die holografische Beschichtung zur Herstellung des Nutzens mit einer Belichtungseinrichtung zur Herstellung eines Volumenhologramms belichtet wird. Diese Verfahrensschritte zur partiellen Beschichtung des Trägermaterials, bei welchem auf die Trägerschicht eine partielle Beschichtung aus holografischem Material aufgebracht ist, welche in der Abmessung eine auf den zumindest einen Nutzen beschränkte Abmessung aufweist, jedoch die Trägerschicht nicht vollständig abdeckt, ermöglichen eine Materialeinsparung und auch eine Einsparung in der Trocknungszeit, so dass geringere Prozess- und Herstellungskosten entstehen. Darüber hinaus wird durch die aufeinanderfolgenden Arbeitsschritte, und zwar zumindest dem partiellen Beschichten mittels dem Auftragswerk und der anschließenden Belichtung der partiellen Beschichtung aus einem holografischen Material innerhalb einer Maschine, ein Inline-Prozess geschaffen, der erhebliche Kostenvorteile gegenüber dem bekannten Verfahren aufweist, bei dem die Trägerschicht mit einem vollflächigen holografischen Material beschichtet und anschließend belichtet wurde, die zur Weiterverarbeitung wieder abgezogen wurde. Darüber hinaus waren ein hoher Materialverbrauch und Verschnitt gegeben. Diese Nachteile werden durch das erfindungsgemäße Verfahren ausgeräumt.

Bevorzugt wird vor dem Aufbringen des holografischen Materials zur partiellen Beschichtung der Trägerschicht das Auftragswerk abgesenkt. Dadurch kann in exakter Weise das holografische Material auf die Trägerschicht aufgebracht werden.

Zur rationellen Herstellung des holografischen Verbundelementes ist vorgesehen, dass mehrere Nutzen mit einem Abstand aufeinanderfolgend auf eine Trägerschicht aufgebracht werden. Dadurch weisen die einzelnen Nutzen einen definierten und vorbestimmten Abstand zueinander auf, wodurch eine Weiterverarbeitung mit einer hohen Arbeitsgeschwindigkeit ermöglicht wird, da eine kontinuierliche Zuführung der einzelnen Nutzen ermöglicht wird.

Eine bevorzugte Ausgestaltung des Verfahrens sieht vor, dass die Position der aufzutragenden partiellen Beschichtung aus holografischem Material durch eine Vorschubsteuerung angesteuert wird, das heißt, dass nach Zuführung einer vorbestimmten Bandlänge der Trägerschicht das Auftragswerk positionsgenau abgesenkt und die partielle Beschichtung aufgebracht wird. Dabei kann gleichzeitig zumindest ein Referenzpunkt von der partiellen Beschichtung erfasst werden, durch welchen zumindest der nachfolgende Belichtungsprozess mit der Belichtungseinrichtung angesteuert wird. Dies ermöglicht eine exakte Positionierung der partiellen Beschichtung zur Belichtungseinrichtung für den anschließenden Belichtungsprozess, um ein vollständiges Volumenhologramm herzustellen.

Des Weiteren kann mittels des Auftragswerks benachbart zur partiellen Beschichtung eine Steuerlinie oder Steuermarke aufgebracht werden. Diese Steuermarke kann vor, während oder nach der partiellen Beschichtung gebildet werden, wobei diese bevorzugt mit dem Auftragswerk während dem Aufbringen der Beschichtung auf die Trägerschicht aufgebracht wird. Diese Steuermarke besteht somit aus dem holografischen Material, welche vorzugsweise in dem nachfolgenden Belichtungsprozess mittels der Belichtungseinrichtung belichtet wird. Alternativ kann als Steuerlinie oder Steuermarke auch eine Einprägung, Ausstanzung, Perforation oder dergleichen vorgesehen sein.

Alternativ kann eine Trägerschicht mit zumindest einer Steuerlinie oder einer Steuermarke dem Auftragswerk zugeführt sowie das Auftragswerk positionsgenau zu dieser Steuerlinie oder Steuermarke abgesenkt und die Beschichtung aufgetragen werden.

Als Auftragsverfahren zum Aufbringen der partiellen Schicht auf die Trägerschicht kann ein Flexodruckverfahren eingesetzt werden. Ebenso eignen sich ein Siebdruck-, Hochdruck-, Tiefdruck-, Durchdruck- oder Flachdruckverfahren. Des Weiteren können auch ein Auflaminieren oder Aufrakeln vorgesehen sein. Dabei werden Druckformen beziehungsweise Druckstempel verwendet, welche der Abmessung des aufzubringen Nutzens entsprechen beziehungsweise geringfügig größer ausgebildet sind, um einen Toleranzbereich für einen nachfolgenden Schnitt bei einem solchen Verbundelement durchzuführen, bei welchem die holografische Beschichtung zusammen mit dem Trägermaterial der Weiterverarbeitung in einem Dokument verwendet wird.

Bei der Herstellung des holografischen Verbundelementes kann des Weiteren vor und/oder nach der Belichtungseinrichtung zumindest eine Schicht, insbesondere eine Schutzfolie, Lackschicht und/oder eine Glättfolie, zumindest auf die partielle Beschichtung aufgebracht werden.

Diese zusätzliche Schicht kann also auf die flächige Abmessung der partiellen Beschichtung beschränkt sein oder sich darüber hinaus erstrecken oder auch in der Bahnbreite der Trägerschicht entsprechen und vollständig längs der Trägerschicht aufgebracht sein.

Die Trägerschicht kann vor dem Zuführen zum Auftragswerk und/oder nach dem Belichten durch die Belichtungseinrichtung mit einem Materialspeicher gepuffert werden. Dies weist den Vorteil auf, dass eine Integrierung in eine sogenannte Inline-Fertigung ermöglicht ist, wodurch ein gegebenenfalls vorgeschalteter oder nachgeschalteter Herstellungsprozess von dem Herstellungsprozess für das holografische Verbundelement entkoppelt werden kann. Durch diese Materialpuffer ist auch das wahlweise Abarbeiten in einer kontinuierlichen Weise oder getakteten Weise möglich. Alternativ kann auch vorgesehen sein, dass der Materialspeicher, der vor dem Auftragswerk positioniert ist, die Trägerschicht von einer Rolle abzieht. Ebenso kann vorgesehen sein, dass der Materialspeicher, welcher der Belichtungseinrichtung nachgeschaltet ist, das holografische Verbundelement einer Speicherrolle zuführt. Es könnte auch ein Materialspeicher zwischen dem Auftragswerk und der Belichtungseinrichtung vorgesehen sein, sodass eine kontinuierliche Beschichtung mit einer getakteten Belichtung miteinander verbunden werden kann.

Der auf die Trägerschicht aufgebrachte Nutzen kann als Einzelnutzen ausgebildet sein. Dadurch kann die partielle Beschichtung gemäß einer ersten Ausführungsform auf die erforderliche Größe für das Volumenhologramm reduziert sein beziehungsweise auf einen das Hologramm umgebenden Toleranzbereich, der für eine Weiterverarbeitung vorgesehen ist. Gemäß einer weiteren Ausführungsform kann die partielle Beschichtung auch an die Formatgröße des Dokumentes angepasst werden, in welches das Verbundelement einzubringen ist. Alternativ können mehrere Einzelnutzen nebeneinander in einer Linie quer zur Längserstreckung der Trägerschicht aufgebracht sein.

Des Weiteren kann vorgesehen sein, dass der Nutzen aus mehreren aneinandergrenzenden Einzelnutzen besteht. Auch eine solche alternative Ausführungsform ermöglicht eine Materialeinsparung, da sich lediglich die partielle Beschichtung aus dem holografischen Material in der Fläche bezüglich der notwendigen Flächenabmessung des Nutzens erstreckt.

Die partielle Beschichtung aus holografischem Material weist bevorzugt eine Schichtdicke von bis zu 50 µm auf. Dies ermöglicht beispielsweise die Einlaminierung der Trägerschicht mit der partiellen Beschichtung in ein Dokument, beispielsweise eine ID-Karte, eine Datenseite eines Identifikationsdokumentes oder eine Bankkarte.

Als Trägerschicht zum Aufbringen der partiellen Beschichtung wird bevorzugt eine Polymerfolie eingesetzt. Diese kann beispielsweise aus PC, PET, PETG, PETF, PEVF, PETP, PCTFE oder bestehen. Ebenso kann auch eine beschichtete Polymerfolie beispielsweise mit einem vernetzbaren Klebstoff oder Heißklebstoff eingesetzt werden. Darüber hinaus ist auch möglich, dass diese Polymerfolien laserfähig sein können. Bevorzugt wird die Materialauswahl der Trägerschicht an das herzustellende Dokument angepasst, das heißt, es wird eine dokumentenkompatible Trägerschicht ausgewählt, auf welche die Beschichtung aufgebracht wird. Zum Beispiel kann eine Trägerschicht aus PC für eine PC-Karte vorgesehen sein, wodurch ein direktes Einlaminieren der Trägerschicht mit dem darauf aufgebrachten Nutzen beziehungsweise dem darin enthaltenen Hologramm ermöglicht ist. Beim Beschichten eines Trägermaterials, beispielsweise aus PET, PETF, PETG für eine PC-Karte kann unter Verwendung einer Klebstoffschicht das Vereinen vorteilhafter Eigenschaften, zum Beispiel Kratzfestigkeit mit einem innenliegenden Hologramm ohne einen weiteren separaten Schritt, vereinen. Darüber hinaus kann beispielsweise bei der Herstellung einer Bankkarte die Trägerschicht aus PVC ausgewählt werden.

Die Trägerschicht weist bevorzugt zum Aufbringen der partiellen Beschichtung, in welche das Hologramm eingebracht wird, eine Rauigkeit auf, welche einen Mittelwert von gleich oder kleiner 14 µm, insbesondere kleiner 7 µm umfasst. Je geringer die Rauigkeit ist, umso besser ist dies für das Einbringen des Hologramms, da dadurch Reflektionen an der Trägerschicht vermieden werden.

Das holografische Verbundelement weist vorteilhafterweise gemäß einer weiteren Ausgestaltung auf der partiellen Beschichtung aus holografischem Material eine Schicht auf, die beispielsweise eine Glätt- und/oder Schutzfolie und/oder eine Lackschicht sein kann. Dadurch kann der Nutzen aus der holografischen Schicht bei der Weiterverarbeitung des Verbundelementes in einer Fertigungsanlage vor Beschädigungen oder vor weiteren Ablagerungen geschützt werden. Der Einsatz einer Glättfolie vor einer Belichtung der holografischen Beschichtung weist den Vorteil auf, dass Reflektionen vermieden werden können. Darüber hinaus weist eine solche Glättfolie den Vorteil auf, dass ein Lichtstrahl der Belichtungseinrichtung - vorzugsweise ein Laserstrahl - nicht gestreut wird, wie dies bei einer rauen Oberfläche der Beschichtung gegeben wäre, wodurch die Qualität der holografischen Belichtung verbessert werden kann.

Auf einer dem Nutzen gegenüberliegenden Seite der Trägerschicht kann eine Haftschicht oder Klebemittelschicht aufgebracht sein, welche eine ablösbare Schutzschicht trägt. Dadurch kann eine Weiterverarbeitung des holografischen Verbundelementes ermöglicht sein.

Des Weiteren ist bevorzugt zwischen der Trägerschicht und der partiellen Beschichtung eine Trennschicht vorgesehen, deren flächige Abmessung zumindest der partiellen Beschichtung entspricht. Durch eine solche Ausgestaltung kann bei einem späteren Weiterverarbeitungsprozess die partielle Beschichtung und gegebenenfalls eine darauf aufgebrachte Schutzschicht, Deckschicht oder dergleichen von der Trägerschicht abgelöst werden, so dass ausschließlich der aus der partiellen Beschichtung bestehende Nutzen zur Herstellung des Dokumentes weiterverarbeitet beziehungsweise einlaminiert wird.

In bestimmten Anwendungsfällen kann es von Vorteil sein, dass der beziehungsweise die durch die partielle Beschichtung aufgetragenen Nutzen von einer Ausgleichsschicht zumindest teilweise umgeben sind. Dies ist insbesondere bei größeren Dicken der partiellen Beschichtung von Vorteil, um nach dem Einlaminieren in einem Dokument stufenförmige Übergänge zu vermeiden beziehungsweise Hohlräume einzulaminieren. Vorteilhafterweise weicht die Ausgleichsschicht die Dicke des Nutzens auf.

Eine weitere vorteilhafte Ausgestaltung des Verfahrens sieht vor, dass die partielle Beschichtung der Trägerschicht mit dem holografischen Material und/oder die Belichtung der auf die Trägerschicht aufgebrachten partiellen Beschichtung aus holografischem Material mit einer kontinuierlichen Bahngeschwindigkeit der Trägerschicht oder getaktet erfolgt. Dadurch kann auch eine Anpassung und Einbindung in eine Inline-Fertigungslinie erfolgen.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1a eine schematische Schnittansicht einer ersten Ausführungsform eines holografischen Verbundelementes,
Figur 1b eine schematische Seitenansicht einer weiteren Ausführungsform eines holografischen Verbundelementes,
Figuren 1c und 1d eine schematische Seitenansicht und Draufsicht einer weiteren Ausführungsform eines holografischen Verbundelementes,
Figur 2 eine schematische Ansicht auf das holografische Verbundelement gemäß Figur 1,
Figur 3 eine schematische Ansicht auf ein alternative Ausführungsform des holografischen Verbundelementes gemäß Figur 2,
Figur 4 eine schematische Darstellung von aufeinander folgenden Prozessschritten zur Herstellung des holografischen Verbundelementes,
Figur 5 eine schematische Darstellung von aufeinander folgenden Prozessschritten zur Herstellung eines Dokumentes mit einem Verbundelement gemäß Figur 1b,
Figur 6 eine schematische Darstellung von aufeinander folgenden Prozessschritten zur Herstellung eines Dokumentes mit einem Verbundelement gemäß Figur 1a
Figuren 7 bis 9 schematische Ansichten von alternativen Ausführungsformen von Sicherheitsdokumenten.

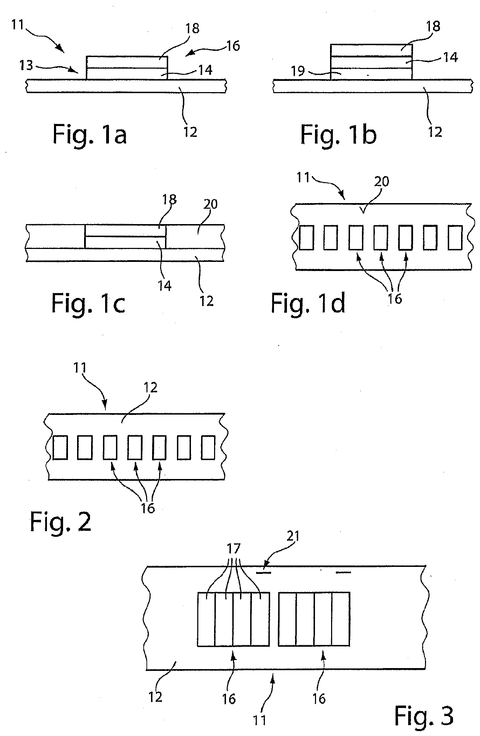

In Figur 1a ist eine schematische Ansicht für einen Schichtaufbau eines holografischen Verbundelementes 11 dargestellt. Dieses holografische Verbundelement 11 umfasst eine Trägerschicht 12, welche als eine Polymerfolie ausgebildet ist, die insbesondere selbsttragend sein kann. Die Trägerschicht 12 ist bevorzugt unbedruckt. Vorteilhafterweise ist die Trägerschicht 12 ohne Schutzfolie ausgebildet. Die Trägerschicht 12 kann eine unbeschichtete Polymerfolie sein, wie beispielsweise PC, PET oder aus einem mit Polycarbonat laminierfähigen Material bestehen. Die Trägerschicht 12 kann auch aus einer beschichteten Polymerfolie bestehen, wie beispielsweise aus PC mit einem vernetzbaren Kunststoff oder einem Heißklebemittel (Hotmelt) oder weiteren Beschichtungsmaterialien. Bevorzugt werden glatte Folien als Trägerschicht 12 eingesetzt. Auf dieser Trägerschicht 12 ist eine partielle Beschichtung 14 aus einem holografischen Material zur Bildung einer Schicht 13 aufgebracht, deren Flächenabmessung zumindest der Abmessung eines Nutzens 16 entspricht. Der Nutzen 16 umfasst zumindest ein Volumenhologramm. Die Größe des Nutzens 16 kann jeweils auf das Hologramm oder auf einen das Hologramm umgebenden Rand als Toleranzbereich für eine spätere Schnittbearbeitung beschränkt sein. Die Größe des Nutzens 16 kann auch der Größe einer Dokumentenseite entsprechen, wobei nur ein Teil der Fläche des Nutzens 16 belichtet ist, um das zumindest eine Hologramm auszubilden. Bei einer solchen Dokumentenseite kann es sich beispielsweise um eine ID-Karte, eine Datenseite oder Personalisierdatenseite eines Identifikationsdokumentes, insbesondere Personalausweis, handeln oder um eine Bankkarte. Ein solches Volumenhologramm kann beispielsweise ein Staatswappen oder dergleichen sein. Auf der partiellen Beschichtung 14 kann eine weitere Schicht 18 aufgebracht sein. Hierbei kann es sich beispielsweise um eine Lackschicht, eine Glättfolie und/oder eine Schutzfolie handeln.

In Figur 1b ist eine alternative Ausführungsform zu Figur 1a dargestellt. Bei dieser Ausführungsform wird auf die Trägerschicht 12 zunächst eine Trennschicht 19 aufgebracht. Anschließend wird auf diese Trennschicht 19 die partielle Beschichtung 14 zur Bildung der weiteren Schicht 13 aus einem holografischen Material aufgebracht. Des Weiteren kann die Schicht 13 durch die Schicht 18 abgedeckt werden. Durch eine solche Trennschicht 19 wird bei der späteren Verarbeitung das Verbundelement 11 in einem Dokument die Trägerschicht 12 abgezogen oder abgenommen. Des Weiteren kann zwischen der Trennschicht 19 und der partiellen Beschichtung 14 mit holografischem Material eine glättende Schicht oder eine Haftschicht vorgesehen sein.

In Figur 1c ist eine schematische Seitenansicht einer alternativen Ausführungsform des Verbundelementes und Figur 1d eine Draufsicht der Ausführungsform gemäß Figur 1c dargestellt. Der Aufbau des Verbundelementes 11 entspricht beispielsweise dem Aufbau in Figur 1a. Abweichend hiervon ist jedoch der Schichtaufbau für die partielle Beschichtung 14 dicker als bei Figur 1a ausgebildet. Sobald eine Dicke von beispielsweise 30 µm der partiellen Beschichtung 14 überschritten ist, wird bevorzugt eine Ausgleichslage 20 aufgebracht. Diese Ausgleichslage 20 besteht beispielsweise aus einer Folie, in welche zuvor Fenster in den Abmessungen des Nutzens 16 eingebracht wurden. Dadurch kann ein Ausgleich in der Schichtdicke geschaffen werden, so dass beim späteren Einlaminieren des Verbundelementes 11 keine stufenartigen Übergänge entstehen. Die Ausgleichslage 20 kann ebenso wie die Schicht 18 auch als Lackschicht beziehungsweise Schutzschicht aufgetragen werden. Die als Ausgleichslage 20 ausgebildete Schicht besteht bevorzugt aus einem anderen Material als das Verbundelement 11. Die Schicht zur Bildung der Ausgleichslage 20 kann in den zu dem Verbundelement 11 benachbarten Bereichen dicker aufgetragen werden, so dass eine glatte Oberfläche, insbesondere mit der Schicht 18, entsteht.

In Figur 2 ist eine schematische Ansicht von oben auf mehrere holografische Verbundelemente gemäß Figur 1 dargestellt. Mehrere zumindest aus der partiellen Beschichtung 14 gebildete Nutzen 16 sind im Abstand zueinander oder hintereinander entlang der bahnförmigen Trägerschicht 12 angeordnet. Beim Ausführungsbeispiel gemäß Figur 2 ist vorgesehen, dass die partielle Beschichtung 14, welche den Nutzen 16 bildet, der bei dieser Ausführungsform einen Einzelnutzen bildet, nach Art einer Insel auf der Trägerschicht 12 aufgebracht ist. Die Flächenabmessung des Nutzens 16 ist beispielsweise dergestalt, dass die Breite des Nutzens 16 geringer als die Materialbahnbreite der Trägerschicht 12 ist, so dass ein seitlicher Randbereich frei von der partiellen Beschichtung 14 ist. Darüber hinaus ist zwischen den einzelnen entlang der Trägerschicht 12 aufgebrachten Nutzen 16 ein Abstand durch eine Freifläche beziehungsweise nicht beschichteten Bereich gebildet.

Alternativ kann vorgesehen sein, dass der Abstand der einzelnen Nutzen 16 gemäß Figur 2 beibehalten wird, jedoch die Breite der Nutzen 16 der Materialbahnbreite entspricht.

Des Weiteren kann alternativ die flächige Abmessung des Nutzens 16 dergestalt sein, dass sich dieser über die Breite der Trägerschicht 12 erstreckt, jedoch einen Abstand zwischen den einzelnen aufeinander folgenden Nutzen 16 in Transportrichtung vorgesehen ist. Ebenso kann vorgesehen sein, dass bei einer unmittelbaren Aneinanderreihung der Nutzen 16 und der Ausbildung einer Breite der Trägerschicht 12 entsprechend der Breite der Nutzen 16 oder umgekehrt ein Vor- und Nachlauf der Trägerschicht nicht beschichtet wird, so dass auch in diesem Fall keine vollflächige Beschichtung 14 der gesamten Trägerschicht 12 gegeben ist und eine Materialeinsparung des holografischen Materials erzielt wird.

Das holografische Material für die partielle Beschichtung 14 besteht aus einem Fotopolymer, einer fotografischen Emulsion, einer Dichromat-Gelatine oder einem lichtempfindlichen, für die Volumenholographie verwendbaren Material.

In Figur 3 ist eine alternative Ausführungsform des holografischen Verbundelementes 11 zu Figur 2 dargestellt. Bei dieser Ausführungsform ist vorgesehen, dass der Nutzen 16 aus mehreren aneinandergrenzenden Einzelnutzen 17 gebildet ist. Im Übrigen gelten die Ausführungen zu den Figuren 1 und 2 analog.

Dem Nutzen 16 kann zusätzlich noch eine Steuermarke 21 zugeordnet sein, die zur Erkennung der Position des Nutzens 16 auf der Trägerschicht 12 bei der Weiterverarbeitung des holografischen Verbundelementes 11 dient. Die Steuermarke 21 ist nur beispielhaft im seitlichen Randbereich angeordnet. Diese Steuermarke 21 kann sowohl im linken als auch im rechten Randbereich als auch vor oder nach dem Nutzen positioniert werden. Des Weiteren können auch mehrere Steuermarken 21, die zudem noch voneinander abweichen können, einem Nutzen 16 zugeordnet sein.

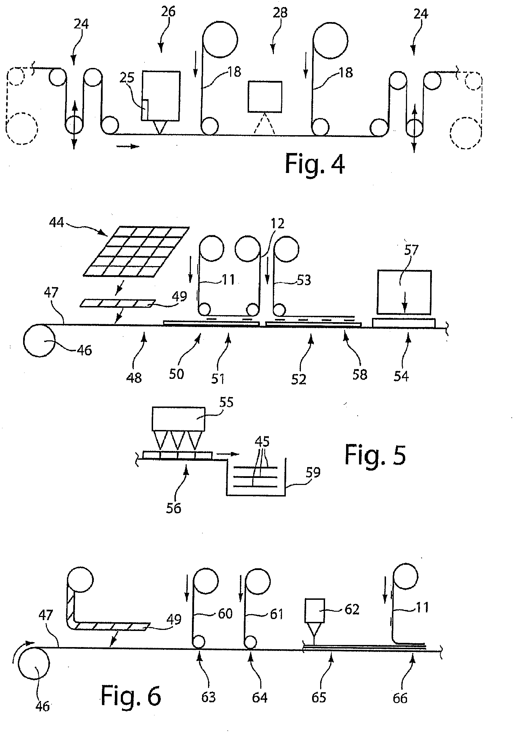

In Figur 4 ist schematisch ein Verfahren zur Herstellung des holografischen Verbundelementes 11 für Sicherheits- oder Wertdokumente dargestellt. Die Trägerschicht 12 kann von einem Speicher, wie beispielsweise einer strichliniert dargestellten Rolle, abgezogen und beispielsweise direkt einem Auftragswerk 26 oder zunächst einer Materialspeichereinrichtung 24 zugeführt werden. Durch die Materialspeichereinrichtung 24 kann anstelle eines kontinuierlichen Herstellungsprozesses für das holografische Verbundelement 11 auch ein getakteter Herstellungsprozess vorgesehen sein. Die Trägerschicht 12 wird dem Auftragswerk 26 zugeführt, welches das holografische Material in fließfähiger Form speichert. Über das Auftragswerk 26 wird die partielle Beschichtung 14 mittels eines Auftragsverfahrens auf die Trägerschicht 12 aufgebracht. Bevorzugt wird dabei ein Flexodruckverfahren eingesetzt. Die partielle Beschichtung 14 wird beispielsweise mit einer Schichtdicke von 10 bis 15 µm aufgebracht, wobei auch eine Schichtdicke bis zu 50 µm aufgebracht werden kann. Zum Auftragen der partiellen Beschichtung 14 über das Auftragswerk 26 wird diese positionsgenau zu einem Auftragspunkt auf der Trägerschicht 12 abgesenkt. Über eine Vorschubsteuerung kann die Position der partiellen Beschichtung 14 auf der Trägerschicht 12 erfasst werden. Dadurch kann bei einem nachfolgenden Belichtungsprozess und weiteren nachfolgenden Be- oder Verarbeitungsschritten des holografischen Verbundelements auf diese Referenzposition zurückgegriffen werden, welche in Abhängigkeit des durchlaufenen Transportweges exakt nachvollziehbar ist. Alternativ oder zusätzlich kann auch zumindest eine Steuermarke 21 mit dem Auftragswerk 26 gleichzeitig mit dem Aufbringen der partiellen Beschichtung 14 oder mit einer separaten Einrichtung auf die Trägerschicht 12 aufgebracht werden. Alternativ zur Aufbringung einer Steuermarke 21 bestehend aus einem holografischen Material können auch auf der Trägerschicht 12 bereits Steuermarken 21 aufgebracht sein. In diesem Fall ist an oder vor dem Auftragswerk 26 bevorzugt eine Erkennungseinrichtung 25 vorgesehen, welche diese Steuermarke 21 erfasst, um daraufhin das Auftragswerk 26 abzusenken und die partielle Beschichtung 14 positionsgenau aufzubringen.

Nach dem Aufbringen der holografischen Schicht 14 erfolgt über eine Belichtungseinrichtung 28 die Belichtung der holografischen Beschichtung 14 und die Herstellung des Hologramms. Dabei kann die gesamte Fläche des Nutzens 16 vollständig belichtet werden. Alternativ kann auch nur eine Teilfläche des Nutzens 16 der Belichtung unterzogen werden.

Zur Herstellung des Hologramms wird bevorzugt ein Kontaktkopierverfahren eingesetzt. Der Belichtungsprozess erfolgt typischerweise im Kontaktkopierverfahren, bei dem das holografische Material in einen Verbund zu einem sogenannten Master gebracht wird, der holografische, diffraktive oder reflektierende Elemente enthalten kann. Das Laserlicht durchstrahlt das holografische Material, wird von den Elementen am Master in den Film zurückgelenkt und interferiert dort. Dieses Interferenzmuster wird im holografischen Material als Hologramm gespeichert. In diesem Zusammenhang wird vollumfänglich auf die DE 198 09 502 B4 Bezug genommen.

Sofern die Steuermarke oder Steuerlinie 21 durch ein holografisches Material ausgebildet wird, erfolgt vorzugsweise gleichzeitig mit der Herstellung des Volumenhologramms auch die Belichtung der holografischen Steuermarke 21 zur Bildung einer holografischen Steuermarke 21, so dass diese Steuermarke 21 direkt im konstanten Maß zum eingebrachten Hologramm steht.

Bevorzugt kann zwischen dem Auftragswerk 26 und der Belichtungseinheit 28 eine erste Schicht 18 aufgebracht werden. Diese kann als Schutzfolie ausgebildet sein und den Nutzen 16 zumindest bezüglich seiner Abmessung überdecken. Alternativ kann auch eine vollflächige Abdeckung der Trägerschicht 12 vorgesehen sein. Anstelle der Schutzfolie kann auch eine Glättfolie und/oder eine Lackbeschichtung als zumindest eine Schicht 18 aufgebracht werden.

Nach der Belichtungseinrichtung 28 kann optional eine weitere Schicht 18 aufgebracht werden. Hierfür gilt Analoges zur vorherigen Schicht 18. Diese weitere Schicht 18 kann auch zusätzlich nach dem Aufbringen der ersten Schicht 18 oder anstelle der ersten Schicht 18 aufgebracht sein.

Nach dem Herstellen des holografischen Verbundelementes 11 kann dieses direkt oder wiederum einer Materialspeichereinrichtung 24 einem Speicher, beispielsweise in Form einer Rolle, zugeführt werden, wie dies strichliniert dargestellt ist.

Durch das gemäß Figur 4 beispielhaft beschriebene Verfahren lässt sich gegenüber dem aus dem Stand der Technik bekannten Verfahren, bei welchen auf die Trägerschicht und Bahnerstreckungsrichtung ein vollflächiger Auftrag mit holographischem Material erfolgt ist, eine erhebliche Einsparung erzielen, wie nachfolgend gezeigt wird. Bei dem in Figur 4 beschriebenen Verfahren wird beispielsweise eine Trägerschicht mit einer Materialbreite von 110 mm verwendet. Die Breite der holographischen Beschichtung beträgt 95 mm (für ID1 inklusive einem Bereich zur Einbringung einer Steuermarke), die Höhe (gemeint die Länge) der holographischen Beschichtung 14 beträgt 56 mm (für ID1 mit einer Höhe von 54 mm + 2 mm Applikationstoleranz). Bei einem Nutzenabstand von 300 mm pro vier Nutzen inklusive einem Zwischenabstand für Streifen ergibt sich bei 1200 Nutzen für einen Auftrag eine Länge von 120 m. Daraus ergibt sich die benötigte Fläche von 1200 × 56 mm × 95 mm, das entspricht 6,4 m². Diesem steht bei einem vollflächigen Auftrag des holographischen Materials gemäß dem Stand der Technik mit einem Vor- und Nachlauf von 20 m eine Fläche von 12,1 m² gegenüber, die sich aus (20 m + 1200 × 300 / 4 mm) × 110 mm (Materialbreite) ergibt. Daraus errechnet sich eine Materialreduktion von beispielsweise 53 % für das holographische Beschichtungsmaterial.

In Figur 5 ist schematisch die Herstellung eines Sicherheitsdokumentes 45 mit einem integrierten Hologramm beziehungsweise dem Nutzen 16 des Verbundelementes 11 dargestellt. Von einer Rolle 46 wird eine erste Folie 47 abgezogen und einer Bearbeitungsstation 48 zugeführt. In dieser Bearbeitungsstation 48 wird ein Mehrfachnutzen, insbesondere 4-fach-Nutzen, in Form eines Streifens 49 auf die Folie 47 aufgebracht. Dieser als Streifen 49 ausgebildete Mehrfachnutzen wird durch Schneiden aus einem Druckbogen 44 erhalten. Dieser Druckbogen 44 ist beispielsweise als Achternutzen hergestellt. Alternativ oder zusätzlich können auch weitere Schichten und/oder Inlays aufgebracht werden. Die Folie 47 mit dem beispielsweise darauf bündig aufliegenden Streifen 49 wird in einem nächsten Schritt 50 einer Applizierstation 51 zugeführt. In diesem Schritt 50 wird das holografische Verbundelement 11, welches gemäß Figur 1b aufgebaut ist, dem Streifen 49 zugeführt, so dass die partielle Beschichtung 14 nach unten weist, das heißt, die partielle Beschichtung 14 auf den Streifen 49 zuweisend zugeführt wird. Die partielle Beschichtung 14 wird aufgrund der Steuermarke 21 mit einer nicht dargestellten Erkennungseinrichtung positionsgenau auf die Einzelnutzen des Streifens 49 aufgebracht und positioniert und verklebt. Die Trägerschicht 12 kann dadurch anschließend in einfacher Weise abgezogen und aufgewickelt werden. Aufstehende Flakes können über Reinigungselemente (zum Beispiel TekNek-Walzen, Saugelemente) entfernt werden.

Vor und/oder nach dem Aufbringen des Verbundelementes 11 können an weiteren Druckbogen, Inlays usw. aufgebracht werden.

In einem anschließenden Schritt 52 wird beispielsweise eine weitere Folie 53 aufgebracht, welche eine Glättfolie, eine Schutzschicht oder dergleichen sein kann. Die einzelnen Schichten 47, 53 werden vorzugsweise punktweise miteinander verbunden, wie beispielsweise verschweißt oder laminiert. Dadurch wird ein Laminatheft 58 oder Folienheft gebildet, welches noch als Mehrfachnutzen ausgebildet ist.

In einem darauffolgenden Schritt 54 können das streifenförmige Laminatheft 58 oder das streifenförmige Folienheft einer Laminierstation 57 zugeführt werden, in der die einzelnen Folien unter Einwirkung von Druck und/oder Temperatur miteinander zu einem Laminat verbunden werden. In einem darauffolgenden Schritt 56 können diese Laminate in einer Schneidstation 55 geschnitten werden, so dass darauffolgend die vereinzelte Laminathefte 58 bzw. die daraus hergestellten Sicherheitsdokumente 45 mit dem integrierten Hologramm bspw. in einem Magazin 59 übereinandergestapelt werden.

Alternativ kann vorgesehen sein, dass die Laminierstation 57 und die Schneidstation 55 zur Vereinzelung der Laminathefte 58 auch vertauscht sind.

Der Bearbeitungsschritt 50 gemäß Figur 5 kann alternativ auch dahingehend ausgebildet sein, dass ein holografisches Verbundelement 11 gemäß Figur 1a auf den Streifen 49 aufgebracht wird. Dabei schließt die Trägerschicht 12 und der Streifen 49 die partielle Beschichtung 14 ein. Der weitere Bearbeitungsschritt 52 zum Aufbringen einer weiteren Folie 53 oder alternativ einer Lackschicht kann dabei entfallen.

Bei dem in Figur 5 beschriebenen Verfahren kann im Schritt 50 auch ein Verbundelement 11 gemäß Figur 1c zugeführt werden.

In Figur 6 ist eine schematische Darstellung einer alternativen Ausführungsform zu Figur 5 dargestellt. Beispielsweise wird wieder von einer Rolle 46 eine Folie 47 abgezogen, die - wie auch bei dem Verfahren gemäß Figur 5 - vorzugsweise aus PC hergestellt ist. Darauf werden beispielsweise von einer Rolle Mehrfachnutzen in Form eines Streifens 49 oder Inlays oder dergleichen abgezogen und auf die Folie 47 aufgebracht. Vorzugsweise werden die Inlays in einem Bogen 44 gemäß Figur 5 bereitgestellt und Streifen 49 aufgebracht. Anschließend können ein oder mehrere Folien 60, 61 in einem oder mehreren Schritten 63, 64 in Abhängigkeit der gewünschten oder des erforderlichen Schichtaufbaus für ein Laminatheft 58 aufgebracht. Die einzelnen aufgebrachten Schichten, insbesondere die gemäß dieser beschriebenen Ausführungsform aufgebrachten Schichten 49, 60, 61, können in einer nicht näher dargestellten Station an einzelnen Punkten vorfixiert und zu dem Laminatheft 58 miteinander verschweißt oder verklebt sein, wobei diese Verbindungsstellen vorzugsweise punktförmig ausgebildet sind.

In einer weiteren nachfolgenden Schritt 65 wird über eine Klebebeschichtungsvorrichtung 62 eine Klebstoffschicht aufgebracht, so dass in einem darauffolgenden Schritt 66 das Verbundelement 11 gemäß der Ausführungsform in Figur 1a aufgebracht werden kann. Dabei ist vorgesehen, dass das Verbundelement 11 mit der partiellen Beschichtung 14 zur Klebstoffschicht weisend zugeführt wird, so dass die partielle Beschichtung 14 zwischen der Trägerschicht 12 und der zuletzt aufgebrachten Schicht 61 positioniert und die Trägerschicht 12 beziehungsweise die partielle Beschichtung 14 mit der Klebstoffschicht zur letzten Schicht 61 verbunden ist.

Auf diesen Schritt 61 kann sich der in Figur 5 beschriebene Schritt 54 und darauffolgend der Schritt 55 anschließen, d.h. dass das in Schritt 66 hergestellte Laminatheft 58 der Laminierstation 57 und anschließend der Schneidstation 55 zugeführt wird, so dass die einzelnen Sicherheitsdokumente 55 darauffolgend beispielsweise in einem Magazin gespeichert werden können. Auch bei dieser Ausführungsform kann die Laminierstation 57 und die Schneidstation 55 vertauscht sein. Des Weiteren kann alternativ vorgesehen sein, dass anstelle der Zuführung der Nutzen von einer Rolle eine analoge Zuführung der Nutzen in Streifen erfolgt, die von einem Bogen getrennt werden, wie dies in Figur 5 dargestellt ist.

Dieses Verfahren weist den Vorteil auf, dass nicht miteinander laminierbare Kunststofffolien zum Einsatz kommen können und zu einem Sicherheitsdokument 45 miteinander verbindbar sind. Beispielsweise bei der Verwendung von PC-Folien für die Schichten 60, 61 kann für das Verbundelement 11 die Trägerschicht 12 beispielsweise aus einer PET-Folie bestehen. Aufgrund der aufgetragenen Klebstoffschicht kann eine anschließende Verklebung zu einem Kartenkörper oder zu einem Sicherheitsdokument 45 unter Temperatur und/oder Druck analog zum Schritt 56 gemäß Figur 5 erfolgen. Sofern das Verbundelement 11 eine Trägerschicht 12 aus PC oder einem anderen mit Polycarbonat laminierfähigen Material aufweist, kann bei diesem Verfahren auf die Klebebeschichtungsstation 62 verzichtet werden, so dass in einem anschließenden Laminationsprozess unmittelbar die Trägerschicht 12 und die weiteren Schichten 60, 61 des Laminatheftes 58 miteinander verbunden werden. Alternativ kann auch die zuletzt aufgebrachte Folie 61 zur Bildung eines Laminatheftes 58 als klebebeschichtete Folie ausgebildet sein, so dass der Schritt 65 zum Aufbringen von Klebemittel aus der Klebebeschichtungseinrichtung 62 entfallen kann.

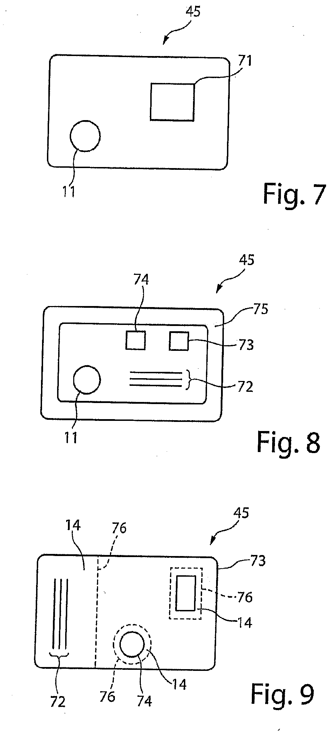

In Figur 7 ist eine schematische Ansicht auf ein Sicherheitsdokument 45 dargestellt, welches nach einem der zuvor beschriebenen Verfahren hergestellt ist. In einer ersten einfachen Ausführungsform ist das Sicherheitsdokument 45 als Datenkarte ausgebildet, welche beispielsweise als Zutrittskarte, Mitgliedsausweis oder dergleichen ausgebildet sein kann. Diese Datenkarte kann beispielsweise einen bedruckten Bereich 71 mit entsprechenden Informationen zur Bestimmung des Zwecks der Datenkarte aufweisen. Diese Zone 71 kann sich teilweise, in mehreren Abschnitten oder auch vollständig über die Datenkarte erstrecken. Des Weiteren weist diese Datenkarte ein holographisches Verbundelement 11 auf, das nach einem der in den Figuren 4 bis 6 beschriebenen Verfahren in die Datenkarte eingebracht ist. Alternativ kann in einer nicht beanspruchten Ausführungsform dieses Verbundelement 11 auch auf eine äußere Oberfläche der Schicht der Datenkarte aufgebracht und anschließend mit einer Schutzschicht überzogen werden.

In Figur 8 ist eine weitere alternative Ausführungsform eines Sicherheitsdokumentes 45 als Datenkarte dargestellt. Beispielsweise kann es sich um einen Ausweis, eine Bankkarte oder dergleichen handeln. Dieses Sicherheitsdokument 45 weist vorzugsweise eine beschreibbare Schicht auf, die innen- und/oder außenliegend vorgesehen sein kann. Auf dieser beschreibbaren Schicht ist ein Personalisierbereich vorgesehen, in dem beispielsweise der Name 72 oder weitere Daten des Inhabers, gegebenenfalls ein Bild 73, insbesondere ein Portraitfoto oder dergleichen, aufgebracht oder aufgezeichnet sind. Des Weiteren können auf dieser beschreibbaren Schicht oder einer weiteren Schicht weitere Sicherheitsmerkmale 74 vorgesehen sein, die nur schematisch und beispielhaft dargestellt sind. Hierbei kann es sich um Kippbilder, Hologramme, Guillochenstrukturen, Sicherheitsfäden oder dergleichen handeln. Des Weiteren ist auf der innen liegenden Schicht oder einer Trägerschicht ein holographisches Verbundelement 11 aufgebracht. Gemäß einer Ausführungsform können das holographische Verbundelement 11, der Name 72, das Bild 73 und die weiteren Sicherheitselemente 74 auf der Trägerschicht aufgebracht sein, welche beispielsweise von einer oberen und unteren Laminatschicht vollständig eingebunden ist, so dass die Trägerschicht von einem Rand 75 vollständig umschlossen ist.

Sowohl der Name 72 als auch das Bild 73 können ebenso aus holographischen Strukturen bestehen, das heißt, dass die Trägerschicht mehrfach im Bereich beschichtet ist, um darauf die einzelnen Informationen und/oder Sicherheitsmerkmale aufzubringen. Alternativ kann bei der in Figur 8 dargestellten und beschriebenen Ausführungsform die Trägerschicht auch mit einer oberen und unteren Laminatschicht und/oder Schutzschicht ohne den Rand 75 ausgebildet sein.

In Figur 9 ist eine weitere alternative Ausführungsform eines Sicherheitsdokumentes 45 dargestellt. Beispielsweise kann das Sicherheitsdokument drei Zonen 76 aufweisen, in welchen sich jeweils die partielle Beschichtung 14 aus holographischem Material erstreckt, um darauf folgend die entsprechenden Informationen einzubringen. Daraus wird ersichtlich, dass sich die partiellen Beschichtungen 14 über einen größeren Bereich erstrecken können als die eingebrachten holographischen Daten oder Informationen, wie dies beispielsweise anhand des Namens 72, des Bildes 73 oder einem Sicherheitselement 74, das dem holographischen Verbundelement 11 entspricht, dargestellt ist.

## Patentansprüche

1. Verfahren zur Herstellung von Sicherheitsdokumenten mit zumindest einer ersten und einer zweiten Schicht (47, 12; 47, 53), die miteinander zu einem Laminatkörper (58) verbunden werden, **dadurch gekennzeichnet,**
- **dass** ein Mehrfachnutzen in Form eines durch Schneiden von einem Druckbogen oder durch Abziehen von einer Rolle erzeugten Streifens (49) auf die erste Schicht (47) aufgebracht wird, welche als Folie von einer Rolle abgezogen wird,
- **dass** ein holografisches Verbundelement (11) hergestellt wird, wobei fließfähiges holografisches Material, das aus einem lichtempfindlichen, für die Volumenholographie verwendeten Material besteht, als partielle Beschichtung (14) zur Bildung einer Schicht (13) nach Art von Inseln auf eine Trägerschicht (12) mit einem Auftragswerk (26) aufgebracht wird, wobei die Trägerschicht (12) nicht vollständig mit der Schicht (13) aus holografischem Material abgedeckt wird, und die durch die partielle Beschichtung (14) gebildeten Inseln zur Herstellung von mindestens einem Volumenhologramm pro Insel belichtet werden,
**dass**
- zwischen der Trägerschicht (12) und der partiellen Beschichtung (14) eine Trennschicht (19) vorgesehen ist,
- das holografische Verbundelement (11) mit der partiellen Beschichtung (14) auf den Streifen (49) zuweisend zugeführt und aufgebracht wird,
- die Trägerschicht (12) abgezogen und aufgewickelt wird,
- **dass** die zweite Schicht (53) als Folie auf die partielle Beschichtung (14) aufgebracht wird,
- die erste und zweite Schicht (47, 53) punktweise zu einem Laminatheft (58) miteinander verbunden werden,
- die Schichten (47, 49, 14, 53) einer Laminierstation (57) zugeführt werden und zu dem Laminatkörper (58) verbunden werden,
und in einem nachfolgenden Schritt (56) das Laminat in einer Schneidstation (55) geschnitten wird und daraus Sicherheitsdokumente (45) mit dem integrierten Volumenhologramm hergestellt werden, oder
- die punktweise miteinander verbundenen Schichten (47, 53) einer Schneidstation (55) zur Vereinzelung der Laminathefte (58) und nachfolgend die Laminathefte (58) einer Laminierstation (57) zugeführt werden.

2. Verfahren nach Anspruch 1, **dadurch gekennzeichnet, dass** die Schichten (47, 53) punktweise durch Verschweißen oder Laminieren zu dem Laminatheft (58) miteinander verbunden werden.

3. Verfahren nach Anspruch 1, **dadurch gekennzeichnet, dass** vor dem Aufbringen des holografischen Materials zur Herstellung der partiellen Beschichtung (14) das Auftragswerk abgesenkt wird.

4. Verfahren nach Anspruch 1, **dadurch gekennzeichnet, dass** mit einer Vorschubsteuerung die Position der aufgetragenen partiellen Beschichtung (14) aus holografischem Material zur Trägerschicht (12) erfasst und zumindest ein Referenzpunkt der partiellen Beschichtung (14) bezogen auf die zugeführte Trägerschicht (12) ermittelt oder zumindest eine Steuermarke (21) mit dem Auftragswerk (26) gleichzeitig mit dem Aufbringen der partiellen Beschichtung (14) oder mit einer separaten Einrichtung auf die Trägerschicht (12) aufgebracht wird, durch welchen zumindest der nachfolgende Belichtungsprozess mit der Belichtungseinrichtung (28) angesteuert wird.

5. Verfahren nach Anspruch 1, **dadurch gekennzeichnet, dass** benachbart zu den durch die partielle Beschichtung (14) gebildeten Inseln zumindest eine Steuermarke (21) mit dem Auftragswerk (26) aufgebracht wird.

6. Verfahren nach Anspruch 1, **dadurch gekennzeichnet, dass** eine Trägerschicht (12) mit zumindest einer Steuermarke (21) dem Auftragswerk (26) zugeführt wird, und die zumindest eine Steuermarke (21) mit einer Erkennungseinrichtung (25) abgefragt wird und das Auftragswerk (26) positionsgenau zur Steuermarke (21) abgesenkt und danach die partielle Beschichtung (14) auf die Trägerschicht (12) aufgetragen wird.

7. Verfahren nach Anspruch 1, **dadurch gekennzeichnet, dass** als Auftragsverfahren zum Aufbringen der partiellen Beschichtung (14) mit dem Auftragswerk (26) ein Flexodruckverfahren, ein Siebdruckverfahren, ein Hochdruck-, Tiefdruck-, Durchdruck-, Flachdruckverfahren, ein Auflaminieren, oder ein Aufrakeln eingesetzt wird.

8. Verfahren nach Anspruch 1, **dadurch gekennzeichnet, dass** vor und/oder nach der Belichtungseinrichtung (28) zumindest eine Schicht (18), welche eine Schutzfolie, eine Lackschicht und/oder eine Glättfolie ist, zumindest auf die partielle Beschichtung (14) aufgebracht werden.

9. Verfahren nach Anspruch 1, **dadurch gekennzeichnet, dass** die partielle Beschichtung (14) mit einer Schichtdicke von bis zu 50 µm aufgetragen ist.

10. Verfahren nach Anspruch 1, **dadurch gekennzeichnet, dass** die Trägerschicht (12) aus einer Polymerfolie, vorzugsweise PC, PET, PVF oder PETP, besteht.

11. Verfahren nach Anspruch 10, **dadurch gekennzeichnet, dass** die Trägerschicht (12) aus einer glatten Folie besteht, welche eine Rauigkeit mit einem Mittelwert von gleich oder weniger als 14 µm, insbesondere weniger als 7 µm aufweist.

12. Verfahren nach Anspruch 1, **dadurch gekennzeichnet, dass** eine Ausgleichslage (20) aufgebracht wird, sobald eine Dicke von 30 µm der partiellen Beschichtung (14) überschritten ist, und
- dass die Ausgleichslage (20) als Folie ausgebildet wird, in welche Fenster in den Abmessungen der durch die partielle Beschichtung (14) gebildeten Inseln eingebracht sind, und die Ausgleichslage (20) auf die Trägerschicht (12) aufgebracht wird, oder
- dass die Ausgleichslage (20) als Lackschicht aufgetragen wird und vorzugsweise die Ausgleichslage (20) in der Dicke der durch die partielle Beschichtung (14) aufgebrachten Inseln und zumindest einer darauf aufgebrachten Schicht (18) entspricht.

## Claims

1. A method of fabricating security documents having at least one first and one second layer (47, 12; 47, 53) which are joined together so as to form a laminate body (58), **characterised in that**
- multiple copies provided in the form of a strip (49) cut off from a printed sheet or unrolled from a roller are applied onto the first layer (47) provided in the form of a film that is unrolled from a roller,
- a holographic composite element (11) is produced, with a flowable holographic material, which may consist of any photosensitive material used for volume holography, being applied onto a support layer (12) as a partial coating (14) in the manner of individual pads using an applicator mechanism (26) so as to form a layer (13), with the support layer (12) being not entirely covered by the layer (13) of holographic material and with the individual pads formed by the partial coating (14) being exposed in such a manner as to create at least one volume hologram for each individual pad,
and **in that**
- a separation layer (19) is provided between the support layer (12) and the partial coating (14),
- the holographic composite element (11) is supplied to the strip (49), and applied thereon, in such a manner that the partial coating (14) faces said strip,
- the support layer (12) is peeled off and rewound,
- the second layer (53) is applied on the partial coating (14) as a film,
- the first and second layers (47, 53) are interconnected point-wise so as to form a tacked laminate stack (58),
- the layers (47, 49, 14, 53) are supplied to a lamination station (57) and are joined together to form a laminate body (58),
and in a subsequent step (56), the laminate is cut into pieces in a cutting station (55), which pieces are then used to fabricate security documents (45) having the integrated volume hologram, or
- the point-wise interconnected layers (47, 53) are supplied to a cutting station (55) for separating the tacked laminate stacks (58) and subsequently said tacked laminate stacks (58) are supplied to a lamination station (57).

2. The method as claimed in claim 1, **characterised in that** the layers (47, 53) are interconnected by welding or laminating in a point-wise manner so as to form the tacked laminate stack (58).

3. The method as claimed in claim 1, **characterised in that** prior to the application of the holographic material for fabricating the partial coating (14), the applicator mechanism is lowered.

4. The method as claimed in claim 1, **characterised in that** using an advance control device, the position of the applied partial coating (14) of holographic material with respect to the support layer (12) is determined and at least one reference point of the partial coating (14) by reference to the supplied support layer (12) is detected or at least one control mark (21) is applied onto the support layer (12) either by the applicator mechanism (26) concurrently with the application of the coating (14) or by a separate device, said reference point being used for activating and controlling at least the subsequent exposure process performed by the exposure device (28).

5. The method as claimed in claim 1, **characterised in that**, using the applicator mechanism (26), at least one control mark (21) is applied adjacent to the individual pads formed by the partial coating (14).

6. The method as claimed in claim 1, **characterised in that** the support layer (12) having at least one control mark (21) is supplied to the applicator mechanism (26) and **in that** said at least one control mark (21) is retrieved by a recognition means (25) and the applicator mechanism (26) is lowered so as to be precisely positioned with respect to the control mark (21) whereupon the partial coating (14) is applied onto the support layer (12).

7. The method as claimed in claim 1, **characterised in that** the application methods for applying the partial coating (14) using an applicator mechanism (26) include a flexographic printing method, a screen printing method, a letterpress printing method, a gravure printing method, a porous printing method, a flatbed printing method, a lamination method or a doctor coating method.

8. The method as claimed in claim 1, **characterised in that** at least one layer (18), which may be a protective film, a varnish layer or a smoothing film, is applied at least onto the partial coating (14) prior and/or subsequent to the exposure device (28) .

9. The method as claimed in claim 1, **characterised in that** the partial coating (14) is applied with a layer thickness of up to 50 µm.

10. The method as claimed in claim 1, **characterised in that** the support layer (12) consists of a polymer film, preferably of PC, PET, PVF or PETP.

11. The method as claimed in claim 10, **characterised in that** the support layer (12) consists of a smooth film having a mean value of roughness equal to, or less than, 14 µm, in particular less than 7 µm.

12. The method as claimed in claim 1, **characterised in that** a compensation layer (20) is applied once the partial coating (14) has reached a thickness exceeding 30 µm, and
- **in that** the compensation layer (20) is realised as a film incorporating windows with dimensions corresponding to those of the individual pads formed by the partial coating (14) and **in that** the compensation layer (20) is applied onto the support layer (12), or
- **in that** the compensation layer (20) is applied as a varnish layer and preferably the compensation layer (20) has a thickness corresponding to that of the individual pads formed by the partial coating (14) plus that of a layer (18) applied thereon.

## Revendications

1. Procédé destiné à fabriquer des documents de sécurité ayant au moins une première et une deuxième couche (47, 12; 47, 53) qui sont assemblées entre elles pour former un corps stratifié (58), **caractérisé en ce que**
- une copie multiple se présentant sous la forme d'une bande (49) qui est obtenue par découpe à partir d'une feuille d'impression ou par dévidage à partir d'un rouleau est appliquée sur la première couche (47) qui est dévidée d'un rouleau en tant que film,
- un élément composite holographique (11) est fabriqué, du matériau holographique coulant constitué d'un matériau photosensible utilisé pour l'holographie de volume étant appliqué à la manière d'îlots en tant que revêtement partiel (14) sur une couche support (12) grâce à un dispositif d'application (26) en vue de former une couche (13), la couche support (12) n'étant pas recouverte entièrement par la couche (13) en matériau holographique et les îlots formés par le revêtement partiel (14) étant exposés à la lumière en vue de fabriquer au moins un hologramme de volume par îlot, **en ce que**
- une couche séparatrice (19) est prévue entre la couche support (12) et le revêtement partiel (14),
- l'élément composite holographique (11) est amené avec le revêtement partiel (14) tourné vers la bande (49) et est appliqué sur celle-ci,
- la couche support (12) est retirée et enroulée,
- la deuxième couche (53) est appliquée en tant que film sur le revêtement partiel (14),
- la première et la deuxième couche (47, 53) sont assemblées en points l'une à l'autre pour former un cahier à stratifier (58),
- les couches (47, 49, 14, 53) sont amenées à une station de stratification (57) et sont assemblées pour former le corps stratifié (58),
- et dans une étape suivante (56), le stratifié est découpé dans une station de coupe (55) en vue de fabriquer des documents de sécurité (45) pourvus de l'hologramme de volume intégré, ou
- les couches (47, 53) assemblées en points l'une à l'autre sont amenées à une station de coupe (55) en vue d'effectuer la séparation des cahiers à stratifier (58) et lesdits cahiers à stratifier (58) sont ensuite amenés à une station de stratification (57) .

2. Procédé selon la revendication 1, **caractérisé en ce que** les couches (47, 53) sont assemblées en points l'une à l'autre, par soudage ou par stratification, en vue de former le cahier à stratifier (58).

3. Procédé selon la revendication 1, **caractérisé en ce que**, avant l'application du matériau holographique, le dispositif d'application est abaissé en vue de réaliser le revêtement partiel (14).

4. Procédé selon la revendication 1, **caractérisé en ce que**, grâce à une commande d'avancement, la position du revêtement partiel (14) en matériau holographique qui a été appliqué est saisie par rapport à la couche support (12) et au moins un point de référence du revêtement partiel (14) est déterminé par rapport à la couche support (12) qui a été amenée ou au moins une marque de synchronisation (21) est appliquée sur la couche support (12) soit par le dispositif d'application (26) en même temps que l'application du revêtement partiel (14) soit par un dispositif à part, ledit point de référence permettant d'activer au moins le processus d'exposition suivant réalisé par le dispositif d'exposition (28).

5. Procédé selon la revendication 1, **caractérisé en ce qu'**au moins une marque de synchronisation (21) est appliquée par le dispositif d'application (26) de manière contiguë aux îlots formés par le revêtement partiel (14).

6. Procédé selon la revendication 1, **caractérisé en ce qu'**une couche support (12) pourvue d'au moins une marque de synchronisation (21) est amenée au dispositif d'application (26) et **en ce que** ladite au moins une marque de synchronisation (21) est interrogée par un dispositif de reconnaissance (25) et que le dispositif d'application (26) est abaissé de manière à être positionné avec précision par rapport à la marque de synchronisation (21) et, cela fait, le revêtement partiel (14) est appliqué sur la couche support (12).

7. Procédé selon la revendication 1, **caractérisé en ce que** le procédé d'application utilisé pour appliquer le revêtement partiel (14) grâce au dispositif d'application (26) est un procédé d'impression flexographique, un procédé de sérigraphie, un procédé d'impression en relief, en creux, par sérigraphie, à plat, une application par stratification ou un raclage.

8. Procédé selon la revendication 1, **caractérisé en ce que**, avant et/ou après le dispositif d'exposition (28), au moins une couche (18), à savoir un film protecteur, une couche de vernis et/ou un film de lissage, est appliquée au moins sur le revêtement partiel (14).

9. Procédé selon la revendication 1, **caractérisé en ce que** le revêtement partiel (14) est appliqué de manière à présenter une épaisseur de couche allant jusqu'à 50 µm.

10. Procédé selon la revendication 1, **caractérisé en ce que** la couche support (12) est constituée d'un film de polymère, de préférence en PC, PET, PVF ou PETP.

11. Procédé selon la revendication 10, **caractérisé en ce que** la couche support (12) est constituée d'un film lisse qui présente une rugosité dont la valeur moyenne est égale ou inférieure à 14 µm, en particulier inférieure à 7 µm.

12. Procédé selon la revendication 1, **caractérisé en ce qu'**une couche de compensation (20) est appliquée dès que l'épaisseur du revêtement partiel (14) dépasse 30 µm, et
- **en ce que** la couche de compensation (20) est formée en tant que film dans lequel sont ménagées des fenêtres aux dimensions des îlots formés par le revêtement partiel (14) et ladite couche de compensation (20) est appliquée sur la couche support (12), ou
- **en ce que** la couche de compensation (20) est appliquée en tant que couche de vernis et de préférence l'épaisseur de la couche de compensation (20) correspond à celle que présentent conjointement les îlots formés par le revêtement partiel (14) et au moins une couche (18) appliquée sur ceux-ci.
